(19) **Europäisches Patentamt**
**European Patent Office**
**Office européen des brevets**

(11) **EP 4 628 523 A1**

(12) **EUROPEAN PATENT APPLICATION**
published in accordance with Art. 153(4) EPC

(43) Date of publication:
**08.10.2025 Bulletin 2025/41**

(21) Application number: **23897704.5**

(22) Date of filing: **27.11.2023**

(51) International Patent Classification (IPC):
*C08J 11/08* (2006.01)    *C08G 63/89* (2006.01)
*C08J 11/24* (2006.01)    *C08J 11/26* (2006.01)

(52) Cooperative Patent Classification (CPC):
**C08G 63/89; C08J 11/08; C08J 11/24; C08J 11/26;**
**Y02W 30/62**

(86) International application number:
**PCT/JP2023/042280**

(87) International publication number:
**WO 2024/117056 (06.06.2024 Gazette 2024/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.11.2022 JP 2022189738**

(71) Applicant: **TEIJIN FRONTIER CO., LTD.**
**Osaka-shi, Osaka 530-0005 (JP)**

(72) Inventors:
- **TSURUDA, Ryo**
  **Osaka-shi, Osaka 530-0005 (JP)**
- **SUNOUCHI, Satoshi**
  **Osaka-shi Osaka 530-0005 (JP)**

(74) Representative: **Carpmaels & Ransford LLP**
**One Southampton Row**
**London WC1B 5HA (GB)**

(54) **METHOD FOR RECOVERING POLYESTER AND METHOD FOR MANUFACTURING RECYCLED POLYESTER**

(57) A polyester which is less colored is obtained by treating a fiber product containing a polyester fiber and a Polyurethane fiber with an aromatic alcohol at a temperature in the range of from (the glass transition temperature of the polyester) to {(the glass transition temperature of the polyester) + 100°C}.

**EP 4 628 523 A1**

**Description**

Technical Field

The present invention relates to a method for recovering a polyester from a fiber product containing a polyester fiber and a polyurethane fiber, and a method for producing a polyester by subjecting the recovered polyester to depolymerization and further subjecting the resultant material to repolymerization to produce a polyester.

Background Art

Polyester has excellent properties, and has been widely used as fiber products and the like, but effective utilization of the used polyester fiber products is an important task to be achieved and also has environmental problems.
With respect to the method for treating the used polyester, mainly, material recycling, thermal recycling, chemical recycling, and the like are studied, and, of these, from the viewpoint of suppressing deterioration of the quality of polyester products due to recycling, chemical recycling is excellent as closed-loop recycling, in which the polyester polymer is subjected to depolymerization into raw materials comprising a dicarboxylic acid and a diol, followed by repolymerization. Especially, the chemical recycling method using an intermediate which can directly produce a recycled polyester by conducting a polycondensation reaction is excellent also from the viewpoint of energy consumption.
However, the recycled polyester polymer obtained by the above-mentioned method has a problem in that a whitened polyester polymer is difficult to obtain.
Particularly, when the polyester fiber product contains a different polymer, such as polyurethane, or is a dyed product, it is difficult to recover a polyester from the fiber product efficiently while suppressing coloring.
For example, in PTL 1, with respect to the step for removing a coloring factor in the intermediate obtained after depolymerization, attempts are made, for example, an adsorption treatment in which the coloring factor is permitted to be in contact with an adsorbent, a decomposition treatment in which the coloring factor is decomposed using a decomposer, and a reduction treatment in which the coloring factor is reduced using a reducing agent. However, removal of a coloring factor, such as a dye, clearly mixed into the polymer is achieved to some extent, but there has not yet been obtained a method for obtaining a polyester polymer which has as small the degree of coloring as that of a polyester polymer produced by a general method that uses no recycled raw material.
Further, studies made by the present inventors have showed that, with respect to the fiber product which is comprised mainly of a fiber formed from a polyester, and which contains a polyurethane, it is especially difficult to separate materials obtained in the steps before and after depolymerization of the fiber product, and that the chemical-recycled polyester obtained after repolymerization is more likely to have brownish hue. In addition, it has been found that when the obtained recycled polyester is used in recycling into a fiber product and the like, the resultant product has poor quality.
PTL 1: JP2008-88096A

Summary of Invention

Technical Problem

An object of the present invention is to provide a method for recovering a polyester which is less colored from a fiber product containing a polyester fiber and a polyurethane fiber.

Solution to Problem

The method for recovering a polyester of the invention comprises treating a fiber product, which is comprised mainly of a fiber formed from a polyester, and which contains a fiber formed from a polymer having a urethane group as a constituent, with a solution of an aromatic alcohol or a derivative thereof at a temperature in the range of from (the glass transition temperature of the polyester) to {(the glass transition temperature of the polyester) + 100°C}.
The present invention includes a preferred embodiment in which the fiber product is one which is dyed with a disperse dye, a preferred embodiment in which the polyester is polyethylene terephthalate, a preferred embodiment in which the polymer having a urethane group as a constituent is polyether polyurethane, and a preferred embodiment in which the aromatic alcohol is benzyl alcohol.
Another aspect of the present invention is a method for producing a recycled polyester, comprising subjecting the polyester obtained by the above-mentioned method to depolymerization to obtain a bis(hydroxyalkyl) aromatic dicarboxylate, and then subjecting the bis(hydroxyalkyl) aromatic dicarboxylate to repolymerization to produce a recycled polyester.

Advantageous Effects of Invention

In the present invention, there can be provided a method for recovering a polyester which is less colored from a fiber product containing a polyester fiber and a polyurethane fiber.

Description of Embodiments

[Fiber product]

The method for recovering a polyester of the invention is a method for recovering a polyester from a fiber product which is comprised mainly of a fiber formed from a polyester, and which contains a fiber formed from a polymer having a urethane group as a constituent. The expression "which is comprised mainly of a fiber formed from a polyester" means that the amount of the fiber formed from a polyester is the largest among the fibers constituting the fiber product. The fiber formed from a polyester preferably occupies 50 wt% or more, further preferably 80 wt% or more of the fiber product.

The polyester is a polycondensation product synthesized by subjecting a polycarboxylic acid and a polyalcohol to dehydration condensation to form an ester linkage. Further, the polyester is a polymer having an ester linkage, and generally is classified into an aliphatic polyester, a semi-aromatic polyester, and a wholly aromatic polyester.

The polycarboxylic acid constituting the polyester is preferably a dicarboxylic acid or an ester-forming derivative thereof. With respect to the dicarboxylic acid, an aromatic dicarboxylic acid, such as terephthalic acid or 2,6-naphthalenedicarboxylic acid, is preferably used.

With respect to the polyalcohol which is another one component constituting the polyester, preferred is a diol or an ester-forming derivative thereof. With respect to the diol, an aliphatic glycol having 2 to 20 carbon atoms is preferably used. Examples of the aliphatic glycols include ethylene glycol (hereinafter, frequently referred to simply as "EG"), 1,3-propanediol, 1,4-butanediol, 1,5-pentanediol, and 1,6-hexanediol. The aliphatic glycol may be an alicyclic glycol having 3 to 30 carbon atoms, and specific examples of alicyclic glycols include 1,4-cyclohexanedimethanol.

In the invention, the polyester using a combination of the above-mentioned polycarboxylic acid and polyalcohol is used as a starting material. The polyester is preferably a polyalkylene terephthalate, and especially, preferred is polyethylene terephthalate, polytrimethylene terephthalate, or polybutylene terephthalate.

The fiber product used in the invention further contains a fiber formed from a polymer having a urethane group as a constituent, in addition to the main fiber formed from a polyester.

Examples of the fibers formed from a polymer having a urethane group as a constituent include a polyurethane fiber and a polyurethane urea fiber. These fibers likely have properties of elastic fibers.

With respect to the fiber formed from a polymer having a urethane group as a constituent, a polyurethane fiber having a urethane linkage (-NHCOO-) in the molecular chain thereof is preferred. The polyurethane fiber comprises a soft segment having a low melting point and having flexing properties and a hard segment having a high melting point, and has excellent elasticity. The polyurethane fiber is classified according to the soft segment thereof into a polyether polyurethane fiber and a polyester polyurethane fiber.

In the invention, with respect to the polyurethane fiber, a polyether polyurethane fiber is preferred, and especially preferred is a polyether polyurethane fiber obtained using a polyether diol, such as polytetramethylene glycol, as a diol component, using an aromatic diisocyanate, such as 4,4'-diphenylmethane diisocyanate, as a diisocyanate component, and using ethylenediamine as a diamine component.

As an example of the polyether polyurethane fiber, there can be mentioned "Roica" (registered trademark), manufactured by Asahi Kasei Fibers Corporation.

The polyurethane fiber is preferably a fiber having a high stretch modulus.

The polyurethane fiber may be used in the form of a yarn having a single component, and may be in the form of a blended fiber, a combined filament yarn, a covered yarn (having a polyurethane fiber as a core), a composite yarn, or the like, each of which is combined with a polyester fiber or the like.

The amount of the polyurethane fiber contained in the fiber product is preferably 50 wt% or less, further preferably less than 50 wt%, further preferably 30 wt% or less, especially preferably 5 to 20 wt%.

The fiber product may be in the form of, for example, sportswear, uniform, or socks.

In the invention, in a preferred embodiment, the fiber product is a dyed fiber product. In a preferred embodiment, the fiber product is dyed with a disperse dye. Further, in a preferred embodiment, the disperse dye is a dye containing a nitrogen atom.

The method for recovering a polyester of the invention comprises treating the above-mentioned fiber product with a solution of an aromatic alcohol or a derivative thereof at a temperature in the range of from (the glass transition temperature of the polyester) to {(the glass transition temperature of the polyester) + 100°C}, recovering a polyester.

[Aromatic alcohol]

As examples of the aromatic alcohol or derivative thereof, there can be mentioned benzyl alcohol, benzaldehyde, and benzoic acid, and benzyl alcohol (hereinafter, frequently referred to as "BA") is preferably used.

[Treatment]

The aromatic alcohol or a derivative thereof is used in the state of a heated solution. The aromatic alcohol or a derivative thereof may be used in combination with another solvent. All of them preferably have a boiling point of 100°C or higher, further preferably 150 to 250°C.

The method for recovering a polyester of the invention comprises treating the fiber product with the solution of an aromatic alcohol or a derivative thereof under conditions at a temperature in the range of from (the glass transition temperature of the polyester) to {(the glass transition temperature of the polyester) + 100°C}, recovering a polyester.

The temperature for treating the fiber product is preferably in the range of from {(the glass transition temperature of the polyester) + 10°C} to {(the glass transition temperature of the polyester) + 80°C}, further preferably in the range of from {(the glass transition temperature of the polyester) + 15°C} to {(the glass transition temperature of the polyester) + 60°C}.

The amount of the solution used when treating the fiber product is preferably 3 to 1,000 times, further preferably 5 to 500 times, especially preferably 8 to 50 times the weight of the treated fiber product.

The treatment is conducted by immersing the fiber product in the solution. The treatment may be performed in a way that the fiber product is immersed in the solution and allowed to stand, but the treatment is preferably conducted in such a way that the fiber product is immersed in the solution and the solution is stirred by liquid flow circulation, a rotating blade, or the like.

After immersed, the fiber product is desolvated. As a treatment for desolvation after the immersion, a method, such as a press treatment, a desolvation treatment by centrifugal separation, or Soxhlet's extraction, can be used.

A cycle of immersion and desolvation is preferably repeated two or more times, and a cycle of immersion and desolvation is repeated preferably five times or more, especially preferably six to ten times.

The desolvation treatment is conducted under conditions such that the weight of the fiber product including the solution obtained after the desolvation preferably becomes 300 wt% or less, further preferably 150 to 250 wt%, especially preferably 180 to 220 wt%, based on the dry weight of the fiber product.

[Method for producing a recycled polyester]

The method for producing a recycled polyester, which is another aspect of the present invention, comprises subjecting a polyester obtained by the above-mentioned method for recovering a polyester to depolymerization to obtain a bis(hydroxyalkyl) aromatic dicarboxylate, and then subjecting the bis(hydroxyalkyl) aromatic dicarboxylate to repolymerization, producing a recycled polyester.

By this method, a polyester having small yellowness index and high whiteness can be obtained.

[Depolymerization]

In the depolymerization, a catalyst is preferably used. With respect to the catalyst, a first-row transition metal catalyst is preferably used. Specific examples of such catalysts include an oxide, a fatty acid salt, a carbonate, a sulfate, a phosphate, an oxide, a hydroxide, a halide, or an alcoholate of a first-row transition metal.

With respect to the first-row transition metal, manganese or zinc is preferably used. With respect to the catalyst, manganese oxide, manganese acetate, zinc oxide, or zinc acetate is preferably used, and manganese acetate is especially preferably used. The catalysts may be used individually or in combination.

The catalyst is preferably used in the form of a solution obtained by preliminarily dissolving the catalyst in an alkylene glycol. With respect to the alkylene glycol (hereinafter, frequently referred to simply as "AG"), the same diol as the diol component forming the skeletal structure of the polyester used in the fiber product is preferably used.

With respect to the alkylene glycol, there can be used the diol constituting the polyester which is finally obtained as a product by subjecting the bis(hydroxyalkyl) aromatic dicarboxylate as an intermediate to repolymerization.

With respect to the same diol as the diol component forming the skeletal structure of the polyester, in the case where the polyester is polyethylene terephthalate (PET), the diol is ethylene glycol (EG), in the case where the polyester is polytrimethylene terephthalate, the diol is 1,3-propanediol (trimethylene glycol, C3G), and, in the case where the polyester is polybutylene terephthalate, the diol is 1,4-butanediol (C4G). The diol may be in the form of a mixture.

Generally, for example, when a depolymerization product of polyester is stored for a long time, it is likely that the degree of discoloration of the product is gradually increased, but it is clear that the product obtained by the method for recovering a polyester or the method for producing a recycled polyester of the invention unlikely suffers discoloration. Especially when a manganese catalyst is used in the depolymerization, the resultant depolymerization product unlikely suffers discoloration.

The amount of the catalyst used in the depolymerization is preferably 20 to 500 mmol%, further preferably 30 to 300 mmol%, especially preferably 50 to 150 mmol%, based on the mole of the polyester. The unit "mol%" indicates the ratio of the number of the catalyst molecules to the number of the constituent units of the polyester. The unit "mmol%" means 1/1,000 times the value indicated by "mol%". When the amount of the catalyst used is smaller than the above range, the catalytic activity is not satisfactory, and, when the amount of the catalyst used is larger than the above range, the effect for suppressing discoloration is disadvantageously reduced. When using a manganese catalyst, the depolymerization can be conducted using a reduced amount of the catalyst.

In the depolymerization, an alkylene glycol is used preferably in an amount of 2 to 20 times, further preferably 3 to 10 times the weight of the polyester obtained after the recovery treatment. By using an increased amount of the alkylene glycol in the depolymerization and then further conducting crystal deposition and solid-liquid separation, the amount of the depolymerization catalyst and other foreign matter mixed into the product can be reduced. Further, especially when manganese acetate is used as the catalyst, the solubility of manganese acetate in an alkylene glycol is such high that the amount of the remaining catalyst in the subsequent step can be more effectively reduced.

[Crystal deposition]

It is preferred that, after conducting the depolymerization using the catalyst, the obtained bis(hydroxyalkyl) aromatic dicarboxylate is subjected to crystal deposition in an alkylene glycol by decreasing the temperature. With respect to the conditions for temperature decrease in the crystal deposition, preferred is a way of decreasing the temperature from a temperature of 60°C or higher to 25°C or lower, further preferably cooling to 15°C or lower.

It is preferred that, after the crystal deposition, the resultant bis(hydroxyalkyl) aromatic dicarboxylate is subjected to solid-liquid separation. The alkylene glycol content of the cake obtained after the solid-liquid separation is preferably 100 wt% or less, further preferably 55 wt% or less, further preferably 1 to 30 wt%, especially preferably 5 to 25 wt%.

It is preferred that the cake obtained after the depolymerization is subjected to crystal deposition, and then washed with water or an alkylene glycol. It is preferred that a washing treatment is conducted while spraying a washing liquid onto the cake using a Nutsche (Buchner funnel). By performing these treatments, the depolymerization catalyst, other coloring causative substances and the like dissolved in the alkylene glycol are washed away, making it possible to obtain the bis(hydroxyalkyl) aromatic dicarboxylate having a higher degree of purification.

With respect to the solution used for washing, a solution having a low viscosity is preferred, and, from this point of view, water is preferably used. The amount of the washing liquid is preferably 1 to 100 times, further preferably 1.5 to 10 times the weight of the cake. The temperature of the washing liquid during washing is preferably 0 to 40°C. When the temperature of the washing liquid is higher than the above temperature, a disadvantage is caused in that the cake per se is likely to be dissolved, so that the yield is lowered.

After washed, the cake is dried by means of a vacuum dryer or the like, so that the bis(hydroxyalkyl) aromatic dicarboxylate can be obtained.

The obtained bis(hydroxyalkyl) aromatic dicarboxylate may be subjected to adsorption treatment for foreign matter or the like using an adsorbent, such as activated carbon.

When the alkylene glycol used in the method of the invention is the same as the diol component of the polyester obtained after the repolymerization, the cake can be as such subjected to repolymerization without being dried. This is a preferred embodiment.

[Bis(hydroxyalkyl) aromatic dicarboxylate]

The thus obtained bis(hydroxyalkyl) aromatic dicarboxylate can be used in the production of a recycled polyester.

The bis (hydroxyalkyl) aromatic dicarboxylate varies depending on the polyester of the fiber product used or the alkylene glycol used in the depolymerization.

When the polyester of the fiber product uses as a raw material a polyester (polyalkylene terephthalate) mainly using terephthalic acid as a polycarboxylic acid, a bis(hydroxyalkyl) benzenedicarboxylate (hereinafter, frequently referred to as "BHAT; bishydroxyalkyl terephthalate") is obtained.

In this case, when C3G (1,3-propanediol (trimethylene glycol)) is used as the alkylene glycol used in the depolymerization, BHPT (bishydroxypropyl terephthalate) is obtained. When C4G (1,4-butanediol) is used as the alkylene glycol used in the depolymerization, BHBT (bishydroxybutyl terephthalate) is obtained. When ethylene glycol is used as the alkylene glycol used in the depolymerization, BHET (bishydroxyethyl terephthalate) is obtained.

[Repolymerization]

The bis(hydroxyalkyl) aromatic dicarboxylate is subjected to repolymerization by a conventionally known method, obtaining a polyester. The obtained polyester is a recycled polyester which is unlikely to suffer coloring, and which has excellent hue.

As a catalyst for repolymerization for obtaining a polyester, a known catalyst, such as an antimony catalyst, a germanium catalyst, or a titanium catalyst, can be used, and diantimony trioxide is preferably used.

It is preferred that a polycondensation reaction is conducted while distilling off an alkylene glycol generated by a reaction during the repolymerization out of the reaction vessel. The amount of the catalyst used is preferably in the range of from 10 to 1,000 ppm, based on the weight of the bis(hydroxyalkyl) aromatic dicarboxylate.

It is preferred that, after the polycondensation using a catalyst, a conventionally known phosphorus stabilizer, such as orthophosphoric acid or phosphorous acid, is added. The amount of the phosphorus stabilizer used is preferably in the range of from 1 to 100 ppm, based on the weight of the bis(hydroxyalkyl) aromatic dicarboxylate.

The thus obtained recycled polyester is unlikely to suffer discoloration, such as yellowing. This effect is remarkable especially when depolymerization is conducted using a manganese catalyst at a low concentration. The reason for this is considered that the manganese catalyst is unlikely to form a coloring by-product, and dissociation of the catalyst from the bis(hydroxyalkyl) aromatic dicarboxylate is easy in the subsequent crystal deposition step and the like, so that the catalyst is very unlikely to remain as an impurity.

[Properties of the recycled polyester]

In the recycled polyester obtained by the method for recovering a polyester of the invention, the polyurethane component has been removed. Further, when the fiber product is one which is dyed, the dye also has been removed.

The obtained recycled polyester preferably exhibits properties described below.

The obtained recycled polyester has a b* value of 8 or less, preferably 1 to -20, further preferably 0.5 to - 15, in terms of a hue as measured using a colorimeter for L*, a*, b* color space in accordance with International Commission on Illumination (CIE).

The obtained recycled polyester preferably has a yellowness index (YI) of 15 or less, further preferably 5 to -50, further preferably 0 to -20.

The obtained polyester has a whiteness (W) of 75 or more, further preferably 80 to 100.

With respect to the nitrogen derived from the polyurethane or dye contained in the obtained recycled polyester, the recycled polyester preferably has a nitrogen content of 15 ppm or less, further preferably 10 ppm or less.

With respect to the recycled polyester obtained after repolymerization, the polymer preferably has an IV of 0.30 to 1.50 dl/g, further preferably 0.40 to 1.30 dl/g, especially preferably 0.50 to 1.20 dl/g.

Examples

Hereinbelow, the present invention will be described in more detail with reference to the following Examples. In the following Examples, values were individually determined by the methods described below. The unit "% owf" is an abbreviation of "% on the weight of fiber".

1) Hue (L*a*b*) (Col (Lab))

A polymer (5 g) obtained after repolymerization was pressed by two metal plates into a plate form, and then heated at 140°C for 2 hours, crystallizing the sample. With respect to the obtained sample for measurement, using a measurement apparatus ("ZE-6000", manufactured by Nippon Denshoku Industries Co., Ltd.), hue L*, a*, b* values were measured in accordance with JIS Z8781-4:2013.

A yellowness index (YI) was determined by the following formula (1), and a whiteness (W) was determined by the following formula (2).

Yellowness index (YI): $0.34 - 71.7 \times a/L + 178.78 \times b/L$ (1)

$$\text{Whiteness (W): } 100 - \sqrt{\{(100 - L)^2 + a^2 + b^2\}} \quad (2)$$

With respect to the yellowness index (YI), the higher the value, the higher the yellowness degree, and, with respect to the whiteness (W), the higher the value, the higher the whiteness degree.

2) Nitrogen (N) content

A nitrogen content of the fiber product, such as a cloth, or a fiber, or the like was measured using Total Nitrogen Analyzer (TN-110, manufactured by Mitsubishi Chemical Industries Ltd.).

[Example 1]

(Recovery step for polyester)

As the fiber product, a cloth formed from 360 g of a dyed polyethylene terephthalate (hereinafter, referred to as "PET") fiber and 40 g of polyurethane (hereinafter, frequently referred to as "PU") was prepared.

The PET fiber was a yarn having an IV of 0.60 dl/g, a Tg of 70°C, a Tm of 255°C, 24 dtex, a strength of 3.9 cN/dtex, and an elongation of 41%, which is dyed using a disperse dye containing 0.87% owf of a nitrogen-containing orange dye, 0.4% owf of a nitrogen-containing red dye, and 4.7% owf of a nitrogen-containing black dye, and which is a fiber having a nitrogen (N) content of 0.38 wt%. As the PU fiber, a polyether polyurethane fiber having high stretchability ("Roica", manufactured by Asahi Kasei Fibers Corporation; 22 dtex/fiber; strength: 1.6 cN/dtex; elongation: 345%, 300%; stretch modulus: 82%; nitrogen (N) content: 1.06 wt%) was used.

400 g of the fiber product was placed in a 5 l separable flask, and 4,000 g of benzyl alcohol (BA), which had been separately heated in a beaker so that the inner temperature became 105°C, was further placed in the flask. The contents of the flask were stirred for 30 minutes while controlling the inner temperature to be 105°C.

The fiber product in the form of a cloth was taken out from the separable flask, and pressed to remove an excess treatment liquid. Coloring of the treatment liquid was seen, and the roughly decolored fiber product obtained after pressed had a weight of 970 **g.**

The fiber product obtained after pressed was further placed in the above-mentioned separable flask, and a cycle of the same steps for immersion in the solution and press as mentioned above was repeated six times with respect to the fiber product. After the 3rd treatment, the fiber product was found by visual observation to become white, but, even after the 4th treatment and fifth one, slight coloring of the treatment liquid after pressed was seen, and, after the 6th treatment, the treatment liquid eventually became transparent.

The fiber product obtained after the treatment was dried in a vacuum dryer at 80°C for 8 hr, recovering a white polyester having a high whiteness.

(Recycling step for polyester)

300 Parts by weight of the polyester recovered by the above-mentioned method, 1,500 parts by weight of ethylene glycol (EG), and, as a depolymerization catalyst, 0.38 parts by weight of manganese acetate (100 mmol%, based on the mole of the polyester) were charged into a 2 L separable flask and the flask was purged with nitrogen gas. In this instance, the manganese acetate was preliminarily dissolved in EG and then charged.

Then, the separable flask containing therein the sample was heated by means of a mantle heater, wherein the inner temperature was set to 220°C, and, while stirring, a depolymerization treatment was conducted under atmospheric pressure for 4 hours. The BHET (bis(hydroxyethyl) benzenedicarboxylate) solution obtained after the depolymerization was colorless and transparent, and coloring was not seen. Further, the solution obtained after the depolymerization was subjected to filtration using a 200 μm mesh to remove solids remaining in the solution, and the resultant solution was gradually cooled to 70°C, and then, while stirring and cooling, subjected to temperature decrease of from 70°C to 40°C from a time of 0 to 10 minutes, temperature decrease of from 40°C to 30°C from a time of 10 to 60 minutes, and temperature decrease of from 30°C to 15°C from a time of 60 to 180 minutes, and then the resultant solution was stirred for 60 minutes while maintaining the inner temperature at 15°C, and the inner temperature was decreased to cause crystals of BHET to deposit (for 4 hours in total), obtaining a BHET/EG slurry.

The BHET/EG slurry was subjected to press treatment using a filter press, manufactured by Nihon Rokasochi Co., Ltd., to perform solid-liquid separation of BHET and EG. The BHET separated in this instance contained EG in an amount of 35 wt%, based on the weight of the cake recovered after the filter press treatment. The cake obtained after the EG separation was subjected to water washing treatment using a Nutsche while spraying pure water at 25°C in an amount two times the weight of the cake. The BHET obtained after completion of the solid-liquid separation was then subjected to drying treatment in a vacuum dryer at 50°C for 8 hours, obtaining dried BHET. The obtained BHET was white, and mixing of foreign matter was not seen.

Then, 254 parts by weight of the resultant dried BHET and 0.007 parts by weight of a phosphorus stabilizer as well as 0.07 parts by weight of diantimony trioxide as a repolymerization catalyst were charged into a reaction vessel in a nitrogen gas atmosphere under atmospheric pressure. Then, the temperature in the reaction vessel was set to 285°C and the pressure was stepwise reduced under conditions at atmospheric pressure for 10 minutes, a pressure of 4 kPa for 10 minutes, and a pressure of 0.4 kPa for 40 minutes, and, while distilling off ethylene glycol and the like generated by the reaction out of the reaction vessel, a polycondensation reaction was conducted, obtaining a recycled polyester.

With respect to the fiber product before the recovery treatment, the fiber product obtained after the treatment and being dried, and the recycled polyester obtained after repolymerization, physical properties including Lab values and a nitrogen content were shown in Table 1.

[Example 2]

A recovery treatment and a recycling treatment were performed in substantially the same manner as in Example 1 except that the temperature for the treatment with benzyl alcohol (BA) was increased from 105°C to 130°C. The color of the residual liquid after the press in the recovery step was dark, as compared to the color in Example 1, and deposits which appeared to be dissolved PET were found in the residual liquid, and the resultant fiber product was a polyester cloth having a high whiteness. The fiber product obtained after the treatment and being dried had a weight of 302 g, and the yield was slightly poor.

With respect to the fiber product before the recovery treatment, the fiber product obtained after the treatment and being dried, and the recycled polyester obtained after repolymerization, physical properties were shown in Table 1.

[Example 3]

A recovery treatment was performed in substantially the same manner as in Example 1 except that the temperature for the treatment with benzyl alcohol (BA) was increased from 105°C to 160°C. The color of the residual liquid after the press in the recovery step was dark, as compared to the color in Examples 1 and 2, and deposits, which appeared to be dissolved PET, in a larger amount than that in Example 2 were found in the residual liquid, and the resultant fiber product was a polyester cloth having a high whiteness. The fiber product obtained after the treatment and being dried had a weight of 178 g, and the yield was poor, and hence the recycling step was not conducted.

With respect to the fiber product before the recovery treatment and the fiber product obtained after the treatment and being dried, physical properties were shown in Table 1.

[Example 4]

A recovery treatment and a recycling treatment were performed in substantially the same manner as in Example 1 except that an undyed white cloth was used.

With respect to the fiber product before the recovery treatment, the fiber product obtained after the treatment and being dried, and the recycled polyester obtained after repolymerization, physical properties were shown in Table 1.

[Table 1]

| | PU/ Dyed | Treatment liquid/ Treatment temperature | | Before treatment | After recovery treatment and drying | Recycled polyester |
|---|---|---|---|---|---|---|
| Example 1 | Contained/ Yes | BA 105°C | Col (Lab) | 17.2/6.1/0.23 | 90.5/-0.3/-3.0 | 85.6/-2.7/-8.8 |
| | | | YI | -22.7 | -5.3 | -15.8 |
| | | | W | 17.0 | 90.0 | 82.9 |
| | | | N (ppm) | 4,910 | 108 | 11.2 |
| | | | IV (dl/g) | 0.60 (PET) | 0.60 | 0.64 |
| | | | Weight (g) | 400 | 345 | - |
| Example 2 | Contained/ Yes | BA/ 130°C | Col (Lab) | 17.2/6.1/0.23 | 92.6/-0.6/-4.1 | 87.8/-3.2/-8.9 |
| | | | YI | -22.7 | -7.1 | -15.2 |
| | | | W | 17.0 | 91.5 | 84.6 |
| | | | N (ppm) | 4,910 | 89 | 9.9 |
| | | | IV (dl/g) | 0.60 (PET) | 0.59 | 0.65 |
| | | | Weight (g) | 400 | 302 | - |

(continued)

|  | PU/ Dyed | Treatment liquid/ Treatment temperature |  | Before treatment | After recovery treatment and drying | Recycled polyester |
|---|---|---|---|---|---|---|
| Example 3 | Contained/ Yes | BA 160°C | Col (Lab) | 17.2/6.1/0.23 | 94.9/-0.9/-5.1 | - |
|  |  |  | YI | -22.7 | -8.6 | - |
|  |  |  | W | 17.0 | 92.7 |  |
|  |  |  | N (ppm) | 4,910 | 80 | - |
|  |  |  | IV (dl/g) | 0.60 (PET) | 0.56 |  |
|  |  |  | Weight (g) | 400 | 178 | - |
| Example 4 | Contained/ No | BA/ 105°C | Col (Lab) | 79.2/-1.6/4.1 | - | 86.2/-2.0/-4.4 |
|  |  |  | YI | 11.0 | - | -7.1 |
|  |  |  | W | 78.7 | - | 85.4 |
|  |  |  | N (ppm) | 1,060 | ND | ND |
|  |  |  | IV (dl/g) | 0.62 (PET) | 0.62 | 0.64 |
|  |  |  | Weight (g) | 400 | 361 | - |

[Comparative Example 1]

A recovery treatment was performed in substantially the same manner as in Example 1 except that the temperature for the treatment with benzyl alcohol (BA) was decreased from 105°C to 25°C. In any of the fiber product in the recovery step and the residual liquid after the press, coloring was not seen. Further, no dissolution of PU occurred and the fiber product remained as a cloth having stretchability, and the fiber product obtained after the treatment and being dried had a weight of 400 g which had not changed from the weight before the treatment.
With respect to the fiber product before the recovery treatment and the fiber product obtained after the treatment and being dried, physical properties were shown in Table 2.

[Comparative Example 2]

A recovery treatment was performed in substantially the same manner as in Example 1 except that the temperature for the treatment with benzyl alcohol (BA) was increased from 105°C to 205°C. During the treatment step at 205°C, all of the fiber product containing PET was dissolved in BA, so that the product was not able to be recovered after the press treatment.
With respect to the fiber product before the recovery treatment, physical properties were shown in Table 2.

[Comparative Example 3]

A recovery treatment was performed in substantially the same manner as in Example 1 except that a fiber product, which is similar to that in Example 1 and contains the PU fiber but is an undyed white cloth like Example 4, was used, that the benzyl alcohol (BA) in Example 1 was changed to ethylene glycol (EG), and that the temperature for the treatment with ethylene glycol was increased from 105°C to 160°C.
It was found that PU was changed in color to be brownish during the recovery step, and that almost all the PU solids remained even on the stage of completion of the 6th treatment. With respect to the fiber product before the recovery treatment, the fiber product obtained after the treatment and being dried, and the recycled polyester obtained after repolymerization, physical properties were shown in Table 2.

[Comparative Example 4]

A recovery treatment was performed in substantially the same manner as in Example 1 except that a fiber product, which is similar to that in Example 1 and uses the dyed PET fiber but does not contain the PU fiber, was used, and that the benzyl alcohol (BA) in Example 1 was changed to ethylene glycol (EG). As a result, no change was found in the fiber product and the treatment liquid for press, and therefore the temperature for the treatment with ethylene glycol was increased from 105°C to 160°C, and a recovery treatment was conducted.

The fiber product was slightly reduced in weight, and the cloth was decolored, but the coloring of the cloth remained even on the stage of completion of the 6th treatment. With respect to the fiber product before the recovery treatment, the fiber product obtained after the treatment and being dried, and the recycled polyester obtained after repolymerization, physical properties were shown in Table 2.

[Table 2]

| | PU/ Dyed | Treatment liquid/ Treatment temperature | | Before treatment | After recovery treatment and drying | Recycled polyester |
|---|---|---|---|---|---|---|
| Comparative Example 1 | Contained/ Yes | BA 25°C | Col (Lab) | 17.2/6.1/0.23 | 17.4/6.6/0.51 | - |
| | | | YI | -22.7 | -21.6 | - |
| | | | W | 17.0 | 17.1 | - |
| | | | N (ppm) | 4,910 | 3,727 | - |
| | | | IV (dl/g) | 0.60 (PET) | 0.60 | |
| | | | Weight (g) | 400 | 400 | - |
| Comparative Example 2 | Contained/ Yes | BA 205°C | Col (Lab) | 17.2/6.1/0.23 | - | - |
| | | | YI | -22.7 | - | - |
| | | | W | 17.0 | - | - |
| | | | N (ppm) | 4,910 | - | - |
| | | | IV (dl/g) | 0.60 (PET) | | |
| | | | Weight (g) | 400 | All dissolved | - |
| Comparative Example 3 | Contained/ No | EG 160°C | Col (Lab) | 79.2/-1.6/4.1 | - | 53.8/-0.62/12.5 |
| | | | YI | 11.0 | - | 42.7 |
| | | | W | 78.7 | - | 52.1 |
| | | | N (ppm) | 1,167 | 809 | 699 |
| | | | IV (dl/g) | 0.60 (PET) | 0.62 | 0.66 |
| | | | Weight (g) | 400 | 399 | - |
| Comparative Example 4 | Not contained/ Yes | EG 160°C | Col (Lab) | 17.2/6.1/0.23 | 72.3/4.1/5.8 | 69.3/-4.1/-9.6 |
| | | | YI | -22.7 | 10.6 | -20.2 |
| | | | W | 17.0 | 71.4 | 67.6 |
| | | | N (ppm) | 3,800 | 509 | 461 |
| | | | IV (dl/g) | 0.62 (PET) | 0.62 | 0.64 |
| | | | Weight (g) | 400 | 397 | - |

[Reference Example 1]

A recovery treatment and a recycling treatment were performed in substantially the same manner as in Example 1 except that a fiber product, which is similar to that in Example 1 and uses the dyed PET fiber but does not contain the PU fiber, was used. The obtained recycled polyester had physical properties similar to those in Example 1.

With respect to the fiber product before the recovery treatment, the fiber product obtained after the treatment and being dried, and the recycled polyester obtained after repolymerization, physical properties were shown in Table 3.

[Reference Example 2]

A recycling treatment was performed in substantially the same manner as in Example 4 except that a fiber product, which is similar to that in Example 1 and contains the PU fiber but is an undyed white cloth like Example 4, was used, and that the recovery step was omitted.

With respect to the fiber product before the treatment and the recycled polyester obtained after repolymerization, physical properties were shown in Table 3.

[Reference Example 3]

A recycling treatment was performed in substantially the same manner as in Example 1 except that a fiber product containing no PU fiber and using only an undyed PET fiber was used, and that the recovery step was omitted. The obtained recycled polyester had physical properties similar to those in Example 1.

With respect to the fiber product before the treatment and the recycled polyester obtained after repolymerization, physical properties were shown in Table 3.

[Reference Example 4]

A recycling treatment was performed in substantially the same manner as in Example 1 except that a fiber product, which is similar to that in Example 1 and uses the dyed PET fiber but does not contain the PU fiber, was used, and that the recovery step was omitted. The recycled polyester had a large residual nitrogen content, and had a color that had suffered yellowing.

With respect to the fiber product before the treatment and the recycled polyester obtained after repolymerization, physical properties were shown in Table 3.

[Table 3]

| | PU/ Dyed | Treatment liquid/ Treatment temperature | | Before treatment | After recovery treatment and drying | Recycled polyester |
|---|---|---|---|---|---|---|
| Reference Example 1 | Not contained/ Yes | BA 105°C | Col (Lab) | 17.2/6.1/0.23 | 92.0/-0.8/-3.9 | 88.2/-3.5/-3.0 |
| | | | YI | -22.7 | -6.6 | -2.9 |
| | | | W | 17.0 | 91.1 | 87.3 |
| | | | N (ppm) | 3,800 | 100 | 3.9 |
| | | | IV (dl/g) | 0.62 | 0.63 | 0.64 |
| | | | Weight (g) | 400 | 383 | - |
| Reference Example 2 | Contained/ No | - - | Col (Lab) | 79.2/-1.6/4.1 | - | 48.9/-0.71/30.5 |
| | | | YI | 11.0 | - | 112.9 |
| | | | W | 78.7 | - | 40.5 |
| | | | N (ppm) | 1,167 | - | 758 |
| | | | IV (dl/g) | 0.60 (PET) | - | 0.63 |
| | | | Weight (g) | 400 | - | - |
| Reference Example 3 | Not contained/ No | - - | Col (Lab) | 79.2/-1.6/4.1 | - | 85.3/-3.51/-6.1 |
| | | | YI | 11.0 | - | -9.5 |
| | | | W | 78.7 | - | 83.7 |
| | | | N (ppm) | ND | - | ND |
| | | | IV (dl/g) | 0.62 | - | 0.64 |
| | | | Weight (g) | 400 | - | - |

(continued)

| | PU/ Dyed | Treatment liquid/ Treatment temperature | | Before treatment | After recovery treatment and drying | Recycled polyester |
|---|---|---|---|---|---|---|
| Reference Example 4 | Not contained/ Yes | - - | Col (Lab) | 17.2/6.1/0.23 | - | 21.94/1.01/0.21 |
| | | | YI | -22.7 | - | -1.2 |
| | | | W | 17.0 | - | 21.9 |
| | | | N (ppm) | 3,800 | - | 788 |
| | | | IV (dl/g) | 0.62 (PET) | - | 0.65 |
| | | | Weight (g) | 400 | - | - |

[Example 5]

A recovery treatment and a recycling treatment were performed in substantially the same manner as in Example 1 except that 1.5 g of manganese acetate was added to 4,000 g of benzyl alcohol (BA). The fiber product obtained after the recovery treatment and further being dried had a weight of 319 g. The yield was slightly poor.

With respect to the fiber product before the recovery treatment, the fiber product obtained after the treatment and being dried, and the recycled polyester obtained after repolymerization, physical properties were shown in Table 4.

[Example 6]

Dried BHET was obtained in the same manner as in Example 1. Then, the BHET was dissolved in heated water (90°C) in an amount 20 times the weight of the BHET, and into the resultant solution was charged activated carbon in an amount 0.25 times the weight of the BHET. The resultant mixture was stirred for one hour. Then, the mixture was subjected to filtration using a Nutsche, and the resultant aqueous solution having the activated carbon removed therefrom was decreased in temperature to cause the BHET to deposit. The aqueous solution was further subjected to filtration using a Nutsche, recovering the BHET.

The recovered BHET was subjected to drying treatment by means of a vacuum dryer under conditions at 50°C for 8 hours. The resultant dried BHET was whiter than that obtained in Example 1, and mixing of foreign matter was not seen.

254 Parts by weight of the dried BHET, 0.007 parts by weight of a phosphorus stabilizer, and 0.07 parts by weight of diantimony trioxide as a repolymerization catalyst were charged into a reaction vessel in a nitrogen gas atmosphere under atmospheric pressure.

Then, the temperature in the reaction vessel was set to 285°C, and the pressure was stepwise reduced under conditions at atmospheric pressure for 10 minutes, a pressure of 4 kPa for 10 minutes, and a pressure of 0.4 kPa for 40 minutes, and, while distilling off ethylene glycol and the like generated by the reaction out of the reaction vessel, a polycondensation reaction was conducted, obtaining a recycled polyester.

With respect to the fiber product before the recovery treatment, the fiber product finally obtained after the treatment and being dried, and the recycled polyester obtained after repolymerization, physical properties including Lab values and a nitrogen content were shown in Table 4.

[Example 7]

The treatment was performed through substantially the same step as in Example 1 except that an undyed white cloth was used as the fiber product, and that, in the recovery step for polyester, 1.5 g of manganese acetate was added to 4,000 g of benzyl alcohol, and a cycle of the steps for immersion in the solution and press was conducted once.

With respect to the fiber product before the recovery treatment, the fiber product obtained after the treatment and being dried, and the recycled polyester obtained after repolymerization, physical properties were shown in Table 4.

[Table 4]

| | PU/ Dyed | Treatment liquid/ Treatment temperature | | Before treatment | After recovery treatment and drying | Recycled polyester |
|---|---|---|---|---|---|---|
| Example 5 | Contained/ Yes | BA Mn Acetate/ 105°C | Col (Lab) | 17.2/6.1/0.23 | 91.1/-1.4/-3.9 | 86.2/1.9/-9.4 |
| | | | YI | -22.7 | -6.2 | -20.7 |
| | | | W | 17.0 | 90.2 | 83.2 |
| | | | N (ppm) | 4,910 | 96 | 10.0 |
| | | | IV (dl/g) | 0.60 (PET) | 0.59 | 0.64 |
| | | | Weight (g) | 400 | 319 | - |
| Example 6 | Contained/ Yes | BA/ 105°C | Col (Lab) | 17.2/6.1/0.23 | 90.5/-0.3/-3.0 | 92.4/-0.2/-3.3 |
| | | | YI | -22.7 | -5.3 | -5.9 |
| | | | W | 17.0 | 90.2 | 83.2 |
| | | | N (ppm) | 4,910 | 108 | ND |
| | | | IV (dl/g) | 0.60 (PET) | 0.60 | 0.64 |
| | | | Weight (g) | 400 | 345 | - |
| Example 7 | Contained/ Yes | BA Mn Acetate/ 105°C | Col (Lab) | 79.2/-1.6/4.1 | - | 94.0/-0.3/-3.6 |
| | | | YI | 11.0 | - | -6.3 |
| | | | W | 17.0 | - | 83.2 |
| | | | N (ppm) | 1,060 | ND | ND |
| | | | IV (dl/g) | 0.62 (PET) | 0.62 | 0.65 |
| | | | Weight (g) | 400 | 357 | - |

Industrial Applicability

The polyester recovered by the present invention and the recycled polyester produced by the invention can be advantageously used in the application of a fiber, a film, a resin, and the like.

## Claims

1. A method for recovering a polyester, comprising treating a fiber product, which is comprised mainly of a fiber formed from a polyester, and which contains a fiber formed from a polymer having a urethane group as a constituent, with a solution of an aromatic alcohol or a derivative thereof at a temperature in the range of from (the glass transition temperature of the polyester) to {(the glass transition temperature of the polyester) + 100°C}.

2. The method for recovering a polyester according to claim **1,** wherein the fiber product is one which is dyed with a disperse **dye.**

3. The method for recovering a polyester according to claim **1,** wherein the polyester is polyethylene terephthalate.

4. The method for recovering a polyester according to claim **1,** wherein the polymer having a urethane group as a constituent is polyether polyurethane.

5. The method for recovering a polyester according to claim **1,** wherein the aromatic alcohol is benzyl alcohol.

6. A method for producing a recycled polyester, comprising subjecting a polyester obtained by the method for recovering a polyester according to any one of claims 1 to 5 to depolymerization to obtain a bis(hydroxyalkyl) aromatic dicarboxylate, and then subjecting the bis(hydroxyalkyl) aromatic dicarboxylate to repolymerization.

## INTERNATIONAL SEARCH REPORT

| International application No. |
| --- |
| **PCT/JP2023/042280** |

| A. | CLASSIFICATION OF SUBJECT MATTER |
| --- | --- |

*C08J 11/08*(2006.01)i; *C08G 63/89*(2006.01)i; *C08J 11/24*(2006.01)i; *C08J 11/26*(2006.01)i
FI:    C08J11/08; C08G63/89; C08J11/26; C08J11/24

According to International Patent Classification (IPC) or to both national classification and IPC

| B. | FIELDS SEARCHED |
| --- | --- |

Minimum documentation searched (classification system followed by classification symbols)

C08J11/08; C08G63/89; C08J11/24; C08J11/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| Y | JP 51-115577 A (MONSANTO CO.) 12 October 1976 (1976-10-12)<br>claims 1, 4, -5, p. 2, lower right column, lines 1-6, p. 4, lower left column, lines 5-7, p. 6, lower right column, lines 12-20 | 1-6 |
| Y | JP 2008-239985 A (TORAY INDUSTRIES, INC.) 09 October 2008 (2008-10-09)<br>claims, paragraphs [0018], [0027] | 1-6 |
| Y | JP 2005-255963 A (IS KK) 22 September 2005 (2005-09-22)<br>claims, paragraphs [0001], [0015], [0059] | 1-6 |
| A | JP 2002-167341 A (TEIJIN LIMITED) 11 June 2002 (2002-06-11)<br>entire text | 1-6 |
| A | JP 6960709 B1 (SHINTECH CORP.) 05 November 2021 (2021-11-05)<br>entire text | 1-6 |
| A | JP 2008-088096 A (NISUKO KK) 17 April 2008 (2008-04-17)<br>entire text | 1-6 |

✓ Further documents are listed in the continuation of Box C.    ✓ See patent family annex.

| | | |
| --- | --- | --- |
| \* | Special categories of cited documents: | |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" | document member of the same patent family |

| Date of the actual completion of the international search | Date of mailing of the international search report |
| --- | --- |
| **31 January 2024** | **13 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 628 523 A1**

## INTERNATIONAL SEARCH REPORT

| | International application No. |
|---|---|
| | **PCT/JP2023/042280** |

**C. DOCUMENTS CONSIDERED TO BE RELEVANT**

| Category* | Citation of document, with indication, where appropriate, of the relevant passages | Relevant to claim No. |
|---|---|---|
| A | JP 2015-048570 A (FAR EASTERN NEW CENTURY CORP.) 16 March 2015 (2015-03-16) entire text | 1-6 |

Form PCT/ISA/210 (second sheet) (July 2022)

## INTERNATIONAL SEARCH REPORT
### Information on patent family members

International application No.

**PCT/JP2023/042280**

| Patent document cited in search report | | | Publication date (day/month/year) | Patent family member(s) | | | Publication date (day/month/year) |
|---|---|---|---|---|---|---|---|
| JP | 51-115577 | A | 12 October 1976 | US | 4003881 | A | |
| | | | | column 1, lines 14-18, column 3, lines 44-46, column 6, lines 25-47, claims 1, 4-5 | | | |
| | | | | DE | 2607344 | A1 | |
| | | | | FR | 2301555 | A | |
| | | | | CA | 1039895 | A | |
| JP | 2008-239985 | A | 09 October 2008 | (Family: none) | | | |
| JP | 2005-255963 | A | 22 September 2005 | (Family: none) | | | |
| JP | 2002-167341 | A | 11 June 2002 | US | 2004/0054019 | A1 | |
| | | | | EP | 1344765 | A1 | |
| | | | | TW | 528773 | B | |
| | | | | CN | 1483015 | A | |
| | | | | KR | 10-0746678 | B1 | |
| JP | 6960709 | B1 | 05 November 2021 | WO | 2022/003990 | A1 | |
| | | | | WO | 2022/004359 | A1 | |
| | | | | TW | 202204500 | A | |
| | | | | TW | 202208530 | A | |
| | | | | KR | 10-2023-0026495 | A | |
| | | | | KR | 10-2023-0027276 | A | |
| | | | | CN | 115803377 | A | |
| | | | | CN | 115843291 | A | |
| JP | 2008-088096 | A | 17 April 2008 | (Family: none) | | | |
| JP | 2015-048570 | A | 16 March 2015 | US | 2015/0059103 | A1 | |
| | | | | EP | 2868800 | A1 | |
| | | | | TW | 201510319 | A | |
| | | | | CN | 104420191 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008088096 A